# EUROPÄISCHE PATENTSCHRIFT

(11) **EP 1 261 774 B1**
(45) Veröffentlichungstag und Bekanntmachung des Hinweises auf die Patenterteilung: **04.01.2006**
(21) Anmeldenummer: 01927574.2
(22) Anmeldetag: 01.03.2001
(51) Int. Cl.: E01C 19/10, C04B 26/26, C04B 18/02

(54) **Verfahren zur Herstellung einer thermoplastischen Füllmasse**
Method for producing a thermoplastic filler
Procédé de fabrication d'une masse de remplissage thermoplastique

(30) Priorität: 03.03.2000 DE 10010451
(43) Veröffentlichungstag der Anmeldung: 04.12.2002
(73) Patentinhaber: Hart, Rainer R., 56170 Bendorf-Sayn (DE)
(72) Erfinder: HART, Rainer, R., 56170 Bendorf-Sayn (DE); KUNSIC, Darco, 56727 Mayen (DE)
(74) Vertreter: Bockermann, Rolf
(86) Internationale Anmeldenummer: PCT/DE2001/000803
(87) Internationale Veröffentlichungsnummer: WO 2001/065012

(56) Entgegenhaltungen:
- EP-A- 0 507 037
- DE-A- 3 817 064
- DE-A- 4 402 369
- DE-A- 19 651 749
- DE-A- 19 903 314
- US-A- 4 236 675

## Beschreibung

Geeignete Bauverfahren für die Erhaltung von Asphaltstraßen mit großer Ausdehnung und/oder Tiefe sind in der Regel in den einschlägigen Vorschriften und Merkblättem beschrieben. Es wird hingewiesen auf z.B. ZTV Asphalt, Merkblatt für die Erhaltung von Asphaltstraßen, ggf. Teil "Dünne Schichten im Kalteinbau" u.ä.

Die in den vorgenannten Regelwerken beschriebenen baulichen Maßnahmen erfordern überwiegend den Einsatz von Großgerät mit entsprechend hohem Personalbedarf.

Wirtschaftlich einsetzbar sind die bekannten baulichen Maßnahmen lediglich bei größeren Flächen und hohem Mengenbedarf.

Die hergebrachten Methoden können insbesondere kleinvolumige Schadenserscheinungen ungleichmäßiger Art, wie z.B. unterschiedlich tiefe und breite Löcher, Aushöhlungen, Schürfe, Spalten, klaffende Risse, flache Abtragungen und ähnliches wirtschaftlich und/oder dauerhaft nicht beseitigen.

Aus Dokument EP-A-0 507 137 sowie DE-A-3 817 064 ist bekannt, eine thermoplastische Füllmasse durch schockartige Abkühlung einer bituminösen Masse herzustellen. Diese Füllmasse wird zur Herstellung von Straßenbeläge verwendet.

Der Erfindung liegt demgemäß ausgehend vom Stand der Technik die Aufgabe zugrunde, ein Verfahren zur Herstellung einer thermoplastischen Füllmasse zu schaffen, mit welcher, insbesondere kurzfristig, auch kleinvolumige Schadenserscheinungen wirtschaftlich und dauerhaft beseitigt werden können.

Die Lösung dieser Aufgabe besteht nach der Erfindung in den Merkmalen des Anspruchs 1.

Bei diesem Verfahren werden Splitt, Sand und mehlfeiner Stoff zusammen mit einem bituminösen Bindemittel in einer Dosier- und/oder Trockenmischtrommel bei einer Temperatur von etwa 180 °C bis 240 °C homogen gemischt. Die verschiedenen Mischungsbestandteile können hierbei in beliebiger Reihenfolge zugegeben werden. Eine bevorzugte Temperatur für das Mischgut ist etwa 220 °C. Dem in ständiger Misch- und/oder Rührbewegung befindlichen Mischgut wird dann ein Kühlmittel in flüssigem, fest- bis halbfestem Aggregatzustand schockartig zugesetzt. Unter schockartig wird hierbei eine intensive, kurzzeitige Kühlmittelzugabe verstanden. Die vor der Kühlmittelzugabe hoch klebefähige Masse zähflüssiger Konsistenz wird durch diese schockartige Zusetzung eines Kühlmittels in ein kömig-rolliges Kleingranulat ohne Zusammenhalt überführt, und zwar durch eine sehr hohe Oberflächenspannung der verschiedenen Bestandteile des Mischguts.

Die Menge an zugegebenem Kühlmittel ist von der jeweiligen Zusammensetzung des Mischguts abhängig und beträgt erfindungsgemäß zwischen etwa 5 % und 30 % der Gesamtmischung. Sinnvoll ist auf jeden Fall eine Überschusszugabe an Kühlmittel, um einen Schmierfilm zwischen den einzelnen Granulaten sicherzustellen, damit ein Anbacken verhindert, die rollige Fortbewegung gewährleistet und das fertige Mischgut förderwillig gemacht wird.

Die Temperatur des fertigen Mischguts nach der Zugabe des Kühlmittels sollte vorzugsweise unter 80 °C liegen.

Je nachdem, welchem Einsatzort das fertige Mischgut zugeführt werden soll, kann das Größtkorn des Mischungsguts zwischen etwa 1 mm und 20 mm liegen. Die Ausfüllung der Haufwerkporen des Korngerüsts dieses Mischguts wird durch den Sand, den mehlfeinen Stoff und das bituminöse Bindemittel sichergestellt.

Als Kühlmittel kann erfindungsgemäß Wasser mit entsprechend geringer Temperatur, Eis oder Trockeneis zur Anwendung gelangen.

Die Füllmasse als Granulat von körnig-rolliger Beschaffenheit kann im Lieferzustand beispielsweise verpackt in Papier- oder Plastiksäcken unterschiedlicher Größe hergestellt werden. Die Größe ist dabei abhängig von den jeweils zu beseitigenden Schäden.

In diesem Zusammenhang erweist sich die Erfindung insbesondere für die Beseitigung von Löchern und Schürfen und sonstigen Schadenserscheinungen als vorteilhaft, die auf Rennstrecken für Automobile und Motorräder beim Training und während der Rennen durch mechanische Beanspruchungen entstehen. Fehlstellen, entstanden durch auflösende Wirkung von Treib- und Schmierstoffen, können ebenfalls beseitigt werden. In diesem Fall ist es lediglich erforderlich, die, wie vorstehend gesagt, in einer bestimmten Größenordnung bereitgestellte Menge an Füllmasse vor Ort in einem Aufwärmkessel oder aber insbesondere in einem Mikrowellengerät aufzuheizen und dadurch in eine gießfähige bzw. streichbare Spachtelmasse mit hoher Klebekraft zu verwandeln. Diese ist in die Schadenserscheinung einzugießen, mit Spachtel einzuebnen, abzusplitten und anzudrücken. Auf diese Weise ist es möglich, die erwähnten Schäden schnell und einwandfrei zu eliminieren.

Natürlich steht es dem Erfindungsgedanken nicht entgegen, bei Bedarf auch tiefere Löcher oder großflächigere Schäden damit zu beseitigen.

Außerdem ist ein vorteilhafter Aspekt der Erfindung, dass mit der thermoplastischen Füllmasse auch klaffende Fugen und Risse im Hochbau schnell und einwandfrei verfüllt werden können.

Die erfindungsgemäße Füllmasse setzt sich aus 30 bis 60 Gew.% Splitt, 10 bis 40 Gew.% Sand, 15 bis 30 Gew.% mehlfeiner Stoff und 6 bis 10 Gew.% Bindemittel zusammen. Hierbei handelt es sich bei dem mehlfeinen Stoff in Form eines sogenannten Füllers um gebrochenen Naturstein in einer Größenordnung unterhalb 0,09 mm. Die zum Einsatz gelangenden Sande haben eine Größenordnung zwischen 0,09 mm und etwa 2 mm und die Splitte in Form von gebrochenen oder auch nicht gebrochenen Mineralstoffkömungen eine Größenordnung von oberhalb 2 mm. Diesen Größenordnungen liegen die Angaben gemäß den Technischen Lieferbedingungen für Mineralstoffe im Straßenbau zugrunde (TL-Min).

Eine derartige gebrauchsfertige Füllmasse hat dann je nach der Zusammensetzung ein Schüttgewicht von 1,2 bis 1,6 kg/dm³, eine Haufwerksporosität von 30,0 bis 60,0 Vol.%, eine Granulat-Rohdichte von 2,2 bis 2,6 kg/dm³ und eine Granulatoberfläche von 0,2 bis 3,0 m²/kg bzw. 500 bis 2000 m²/m³ jeweils errechnet nach DIN 4190 bzw. Kömungsnetz nach Rosin und Rammler.

Entsprechend den Merkmalen des Anspruchs 2 können dem Mischgut stabilisierende Zusätze/Stoffe von 0,2 M.-% bis 6 M.-% (bezogen auf das Gemisch) zugegeben werden. Hierbei handelt es sich insbesondere um mineralische oder nichtmineralische Stoffe (Faserstoffe), die im Merkblatt für stabilisierende Zusätze/stabilisierende Stoffe aufgeführt sind.

Darüber hinaus ist es gemäß Anspruch 3 denkbar, dass das Mischgut oder bereits das Bindemittel (Bitumen) zwecks Haftverbesserung und Erweiterung der Plastizitätsspanne polymer vergütet wird. Die Zugabemenge ist bezogen auf den Bindemittelgehalt und beträgt 2 bis 8 M.-% (absolut).

Schließlich liegt es im Rahmen der Erfindung, dass das Mischgut hydraulisch vergütet wird (Anspruch 4). Unter einer hydraulischen Vergütung, die gemeinsam mit den Merkmalen des Anspruchs 2 und/oder des Anspruchs 3 angewendet werden kann, wird unter anderem die Zusetzung von handelsüblichem Zement und/oder Kalkhydrat verstanden. Die Zugabemenge ist bezogen auf den Bindemittelgehalt und beträgt 20 M.-% bis 60 M.-% (relativ).

## Patentansprüche

1. Verfahren zur Herstellung einer thermoplastischen Füllmasse zur Beseltigung von Oberfltächenschäden in Beton- oder Asphaltflächen bzw. zum Einbringen in Fugen von Hochbauten, bei welchem Splitt, Sand, ein mehlfeiner Stoff und ein bltuminöses Bindemittel bei einer Temperatur von etwa 180°C bis 240°C in folgender Zusammensetzung, ausgedrückt in Gewichtsprozenten, homogen gemischt werden:
| | |
|---|---|
| Splitt | 30-60 |
| Sand | 10-40 |
| mehlfeiner Stoff | 15-30 |
| Bindemittel | 6-10, |
und dass danach unter ständiger Bewegung dieses Mischguts ein Kühlmittel in Form von Wasser, Els oder Trockeneis in einer Menge zwischen etwa 5 % und 30 % der Gesamtmischung dem Mischgut in flüssigem, fest- und halbfestem Aggregatzustand schockartig zugesetzt wird.

2. Verfahren nach Patentanspruch 1, bei welchem dem Mischgut stabilisierende Zusätze/Stoffe zugegeben werden.

3. Verfahren nach Patentanspruch 1 oder 2, bei welchem das Mischgut polymer vergütet wird.

4. Verfahren nach einem der Ansprüche 1 bis 3, bei weichem das Mischgut hydraulisch vergütet wird,

## Claims

1. Method for producing a thermoplastic filler for eliminating surface damage in concrete or asphalt surfaces or for introducing into joints of rising structures, by homogeneously mixing stone chips, sand, a flour-fine material and a bituminous binding agent at a temperature of about 180°C to 240°C in the following composition, expressed in weight percent:
| | |
|---|---|
| Stone chips | 30-60 |
| Sand | 10-40 |
| Flour-fine material | 15-30 |
| Binding agent | 6-10, |
and by subsequently, while continually agitating this mixture, performing shock addition of a coolant in the form of water, ice or dry ice in an amount between about 5% and 30% of the total mix to the mixture in liquid, solid or semi-solid aggregate state.

2. Method according to Claim 1, wherein stabilizing additions/materials are added to the mixture.

3. Method according to Claim 1 or 2, wherein the mixture is polymerically modified.

4. Method according to any one of Claims 1 to 3, wherein the mixture is hydraulically modified.

## Revendications

1. Procédé pour la préparation d'une masse de remplissage thermoplastique pour supprimer les dégâts de surface dans les surfaces de béton ou d'asphalte ou pour l'insertion dans les joints de bâtiments de grande hauteur, procédé dans lequel on mélange de façon homogène des gravillons, du sable, des matières pulvérulentes et un liant bitumineux à une température d'environ 180°C jusqu'à 240°C dans la composition suivante, exprimée en pourcentage en poids :
| | |
|---|---|
| gravillons | 30-60 |
| sable | 10-40 |
| matières pulvérulentes | 15-30 |
| liant | 6-10, |
et en ce qu'ensuite, sous agitation constante de ce mélange, on ajoute par à-coups à ce mélange un agent réfrigérant sous forme d'eau, de glace ou de neige carbonique dans une quantité entre environ 5% et 30% du mélange total à l'état d'agrégat liquide, solide et semi -solide.

2. Procédé selon la revendication 1, dans lequel on ajoute au mélange des matières /additifs de stabilisation.

3. Procédé selon la revendication 1 ou 2, dans lequel le mélange est traité à l'aide de polymères.

4. Procédé selon l'une des revendications 1 à 3, dans lequel le mélange est traité par voie hydraulique.
